(19) Europäisches Patentamt
European Patent Office
Office européen des brevets

(11) Veröffentlichungsnummer: **0 282 875 B1**

(12) **EUROPÄISCHE PATENTSCHRIFT**

(45) Veröffentlichungstag der Patentschrift: **08.01.92**

(51) Int. Cl.⁵: **B32B 7/04**, B32B 27/08

(21) Anmeldenummer: **88103594.3**

(22) Anmeldetag: **08.03.88**

(54) **Mehrlagige Folie.**

(30) Priorität: **18.03.87 DE 3708780**

(43) Veröffentlichungstag der Anmeldung:
**21.09.88 Patentblatt 88/38**

(45) Bekanntmachung des Hinweises auf die
Patenterteilung:
**08.01.92 Patentblatt 92/02**

(84) Benannte Vertragsstaaten:
**AT BE CH DE FR GB IT LI NL SE**

(56) Entgegenhaltungen:
**DE-A- 3 216 097**

(73) Patentinhaber: **Helio Folien GmbH**
**Gladbacher Strasse 189**
**W-4060 Viersen 1(DE)**

(72) Erfinder: **Engelsberger, Herbert**
**Heimbachstrasse 13**
**W-4060 Viersen 1(DE)**

## Beschreibung

Die Erfindung betrifft eine mehrlagige Folie entsprechend dem Gattungsbegriff des Patentanspruches 1, die Herstellung der Folie und deren Verwendung.

Aus der DE-C- 32 16 097 ist eine mehrlagige Folie bekannt, die aus einer ein- oder mehrlagigen Trägerfolie und einer durch Kaschieren damit verbundenen, geblasenen coextrudierten Verbundfolie, deren Lagen aus Polyäthylenen oder Polyäthylencopolymeren unterschiedlicher mechanischer Schockfestigkeit bestehen, hergestellt ist, wobei die coextrudierte Verbundfolie aus einem zwei- bis fünfschichtigen, zusammengelegten Blasschlauch besteht, der zwei in Material und Dicke übereinstimmende Außenlagen, zwei in Material und Dicke übereinstimmende Innenlagen und ggf. bis zu drei Zwischenschichten zwischen jeder Innen- und Außenlage aufweist und wobei die Innenlagen miteinander durch Verblockung und die Außenlage bei einer Verbundfolie ohne Zwischenschicht mit den Innenlagen durch Schmelzverbindung verbunden sind.

Als Trägerfolie schlägt die vorgenannte Schrift ungereckte oder biaxial gereckte Folien auf Basis Polyamid, Polyester, Polypropylen und Zellglas vor, die ggf. zusätzlich mit Aluminiumfolie kaschiert sind, insbesondere mit Aluminium kaschierte Polyesterfolien, metallisierte oder PVDC lackierte gereckte Polyesterfolien oder Polyamidfolien. Zur Ausbildung einer Gassperre werden Polyvinylalkohol-Folien und zur Ausbildung der Außen- oder Innenlagen Copolymere des Polyäthylen/Vinylacetat vorgesehen. Desweiteren können die Außenlagen aus LDPE oder LLDPE und die Innenlagen insbesondere aus einem mit Metallionen vernetzten Äthylen/Methacrylsäurecopolymeren ausgebildet sein.

Diese bekannte Folie, die in den vergangenen Jahren eine große wirtschaftliche Bedeutung erlangte, wird insbesondere bei der Vakuumverpackung von gemahlenem Kaffee mit großem Erfolg eingesetzt. Es hat sich mit dieser bekannten mehrlagigen Folie vor allem eine beträchtliche Reduzierung der Leckagenraten erzielen lassen. Der Nachteil der vorstehend beschriebenen Folie, wie auch der anderer bei der Kaffeeverpackung eingesetzten mehrlagigen Folien, besteht nun darin, daß infolge von Stauchfalten, die bei der Vakuumverpackung entstehen, die fertige Verpackung ein unansehnliches Äußeres aufweist und insbesondere auf der Folie angebrachte Druckmotive oder Schriftzüge unscharf erscheinen. Dieser den optischen Eindruck schwächende Nachteil ist darauf zurückzuführen, daß die bedruckte Folie beim Anlegen des Vakuums eng an das Kaffeepulver angelegt wird und die Konturen des gemahlenen Kaffees sich dadurch auf der Außenseite der mehrlagigen Folien abzeichnen.

Man hat sich bisher vielfach damit beholfen, daß die vorstehend beschriebene, aus einer mehrlagigen Folie gebildete Innenverpackung noch mit einem sogenannten Außenwickler aus bedrucktem Papier, Aluminium/Papier oder aber einer Faltschachtel aus bedrucktem Karton versehen wurde. Neben dem höheren Materialaufwand für den zusätzlichen Außenwickler bzw. die Faltschachtel entsteht auch ein höherer Arbeitsaufwand, da auf der Verpackungsmaschine zwei Abwickelstationen, je eine für Außenwickler und Innenwickler, belegt werden müssen, was zu häufigeren Rollenwechseln und zu einem wegen des zu verwendenden Leims unsauberen Arbeitsprozeß führt.

Die Aufgabe der Erfindung besteht in der Entwicklung einer mehrlagigen, für Vakuumverpackungen geeigneten Folie, die unter Verzicht auf die bisher für notwendig erachteten Außenwickler und mit dem gleichen Arbeitsaufwand wie bei den bisher aus einem Einfachwickler hergestellten Verpackungsbeuteln die Erzielung einer attraktiv aussehenden Verpackung und eines optisch einwandfreien Druckbildes ermöglicht, ohne dabei die von den bekannten mehrlagigen Folien bekannten Vorteile einzubüßen.

Zur Lösung dieser Aufgabe sieht die Erfindung bei einem Gegenstand nach dem Gattungsbegriff des Patentanspruches 1 dessen kennzeichnende Merkmale vor.

Bei der Herstellung eines Verpackungsbeutels bildet die Trägerfolie die Außenseite der Verpackungseinheit und auf ihr ist das Druckbild, der Schriftzug o.ä. angebracht. Die Herstellung einer Verpackungseinheit, z.B. in Form eines Beutels, entspricht der Herstellung eines Beutels aus einem Einfachwickler, unter dem, wie eingangs erwähnt, die Herstellung eines Beutels aus einer einzigen Folienbahn zu verstehen ist und dieser Beutel ohne zusätzlichen Außenwickler aus Papier o.a. eingesetzt wird. Während bei den bekannten Einfachwicklern aber der Nachteil entstand, daß nach dem Evakuieren des befüllten Beutels Stauchfalten entstanden und das Schriftbild eine weniger große Schärfe und Klarheit aufwies, ermöglicht die Erfindung die Herstellung einer wesentlich attraktiver aussehenden Verpackung mit erheblich verbessertem Schriftbild und erzielt insgesamt einen in optischer Hinsicht besseren Eindruck. Diese Wirkung ist darauf zurückzuführen, daß nach dem Evakuieren durch die in der Trägerfolie und der mit ihr durch Kaschieren verbundenen ersten Verbundfolie durch die mittels Perforation angebrachten Löcher Luft eindringt und die erste Verbundfolie innenseitig, d.h. an ihrer Verblockungsstelle wieder getrennt wird. Es entsteht damit quasi eine Trennstelle, so daß die mehrlagige Folie getrennt wird in einen ersten Teil, der aus der Trägerfolie und der mit der Trägerfolie durch Kaschieren verbundenen einen Hälfte der ersten Verbundfolie besteht und in einen zweiten Teil, der aus der zweiten Hälfte der ersten Verbundfolie, der Barrierefolie und der weiteren Verbundfolie oder der die verschweißbare Schicht bildenden einlagigen Folie besteht. Es entsteht somit eine Verpackungseinheit, in der die Vorteile des sogenannten Einfachwicklers mit den Vorteilen einer aus Innen- und Außenwickler gebildeten Verpackungseinheit kombiniert sind. Dabei wird freilich auch der Nachteil der bekannten, aus Außen- und Innenwickler bestehenden Verpackungseinheiten vermieden, der darin bestand, daß beim Befüllen, z.B. eines Kaffeebeutels, kleinere Mengen des Kaffeepulvers zwischen Innen- und Außenwickler gelangten. Ein weiterer Vorteil gegenüber dem bisher bekannten Einfachwickler besteht darin, daß der Nachteil einer zu geringen Durchstoßfestigkeit bei den bekannten mehrlagigen Folien nun nicht mehr gegeben ist. Es entfällt auch der von den aus Innen-und Außenwickler bestehenden Verpackungseinheiten bekannte Nachteil, die gefüllten Verpackungseinheiten an ihrem Kopfende durch ein mit Leim versehenes, sogenanntes Kopfetikett verschließen zu müssen, da die erfindungsgemäße Folie infolge ihrer auf der Unterseite angeordneten verschweißbaren Folienschicht sicher und sauber verschließbar ist.

Die erste Verbundfolie ist verfahrensbedingt zwar vollständig perforiert, d.h. auch die Hälfte, die nach der Trennung zu dem die Barrierefolie enthaltenden zweiten Teil der mehrlagigen Folie gehört, doch ist dies für die Funktion der Erfindung ohne jede Bedeutung, da alle anderen Schichten entweder durch Kaschieren oder durch Schmelzverbund miteinander verbunden sind, es sei denn, daß die verschweißbare Folienschicht Bestandteil einer solchen weiteren Verbundfolie ist, die aus einem zusammengelegten mehrlagigen Blasschlauch besteht, bei dem die Innenschichten ebenfalls durch Blockverbund miteinander verbunden sind. In einem solchen Fall ensricht - nach der Trennung der ersten Verbundfolie

- die zweite Hälfte der mehrlagigen Folie einer mehrlagigen Folie entsprechend der DE-C- 32 16 097.

Für die Zwecke der Erfindung ist es von entscheidender Bedeutung, daß die mit der Trägerfolie durch Kaschieren verbundene erste Verbundfolie innenseitig durch Verblocken verbunden ist. Besteht eine solche Verbundfolie aus lediglich einem einlagigen, zusammengelegten Blasschlauch, erfolgt die Blockbindung an den Innenwänden der Blasschlauchwand, bei einem mehrschichtigen Blasschlauch, wie er in der DE-C- 32 16 097 beschrieben ist, erfolgt die Blockbindung zwischen den Innenlagen, wobei die Außenlagen mit den Innenlagen durch Schmelzverbund verbunden sind. Die Funktionstüchtigkeit der erfindungsgemäß vorgeschlagenen mehrlagigen Folie hängt davon ab, daß die beschriebene Blockbindung einerseits hoch genug ist, um ein vorzeitiges Trennen zu verhindern, andererseits muß sich aber nach dem Evakuieren des gefüllten Verpackungsbeutels, wenn dieser wieder der Umgebungsluft ausgesetzt ist, der gewünschte Trenneffekt zwischen den verblockten Lagen einstellen. Zwischen den durch Schmelzverbund verbundenen Außen - und Innenlagen einer ersten Verbundfolie - gebildet aus einem zweiwandigen Blasschlauch - kann es infolge der hohen Verbundfestigkeit nicht zu einer Trennung kommen.

An den Stellen eines Verpackungsbeutels - hergestellt aus einer mehrlagigen Folie nach der Erfindung - an denen die Schweißnaht zum Schließen des Beutels angelegt wird, werden natürlich auch die bei der Herstellung der mehrlagigen Folie nur verblockten Stellen durch Schmelzverbund verbunden. An den nicht verschweißten Stellen findet die Trennung statt.

Die Anzahl der Perforationslöcher ist auf die innerhalb der ersten Verbundfolie eingestellte Blockbindung abzustimmen. Die Löcher können gleichmäßig auf der Fläche eines Folienzuschnittes für eine Verpackungseinheit verteilt sein, linien- oder musterförmig angeordnet sein, wobei wenige Löcher, unter Umständen sogar ein einziges Loch pro Folienzuschnitt, ausreichend sein können.

Als besonders geeignet haben sich bei der Herstellung der erfindungsgemäßen mehrlagigen Folie folgende Foliendicken erwiesen:

Trägerfolie:          10 bis 15 $\mu$m
erste Verbundfolie: einlagiger zusammengelegter Blasschlauch: Gesamtdicke 20 bis 40 $\mu$m, d.h. Wanddicke des Schlauches 10 bis 20 $\mu$m; zweilagiger coextrudierter Blasschlauch: Gesamtdicke 20 bis 40 $\mu$m und Einzellagen von 5 bis 15 $\mu$m.

Barrierefolien:
aus Aluminium ca. 6 bis 10 $\mu$m aus Polyester,Polyamid 12 bis 15 $\mu$m
weitere Verbundfolie aus coextrudiertem, zweilagigem Blasschlauch: 60 bis 80 $\mu$m
Als geeignete Druckverfahren zur Aufbringung von Druckmotiven oder Schriftzügen haben sich insbesondere das Flexodruckverfahren und das Tiefdruckverfahren zur Konterbedruckung der Trägerfolie gezeigt.

Die Kaschierung kann durch eine vollflächige Kaschierung oder auch durch einen partiell aufgebrachten Kaschierkleber vorgenommen werden, wobei insbesondere zwischen Trägerfolie und der ersten Verbundfolie ein vollflächiger Kaschierkleberauftrag bevorzugt ist.

Eine verschweißbare Folienschicht, gebildet aus einer einlagigen Folie, stellt eine, infolge ihres unkomplizierten Aufbaus, besonders kostengünstige Ausführungsform der vorliegenden Erfindung dar. Das Material einer solchen Folie ist vorzugsweise LDPE, Äthylen-Vinylacetat-Copolymere (EVAC) oder LLDPE. Ist die verschweißbare Folienschicht Bestandteil einer weiteren Verbundfolie, so hat sich eine coextrudierte Verbundfolie, wie sie in der DE-C- 32 16 097 als Bestandteil einer mehrlagigen Folie beschrieben ist, als besonders geeignet erwiesen. Sofern eine oder mehrere Barrierefolien als Zwischenschichten innerhalb einer die verschweißbare Folienschicht aufweisenden Verbundfolie vorgesehen sind, können die Barrierefolien zur Erzielung einer ausreichenden Verbundfestigkeit mit den übrigen Folienlagen einer Verbundfolie mit zusätzlichen Haftvermittlerschichten versehen sein.

Es folgt die Beschreibung von Ausführungsbeispielen der Erfindung anhand der Figuren 1 bis 7:

Figuren 1 bis 5 zeigen im Querschnitt stark vergrößert und unmaßstäblich verschiedene Ausführungsformen der mehrlagigen Folie,

Figur 6 zeigt einen Querschnitt durch einen in vereinfachter Form dargestellten bekannten Verpackungsbeutel, hergestellt aus einem Einfachwickler,

Figur 7 zeigt einen Querschnitt durch einen in vereinfachter Form dargestellten Verpackungsbeutel, hergestellt aus einer mehrlagigen Folie entsprechend der Erfindung.

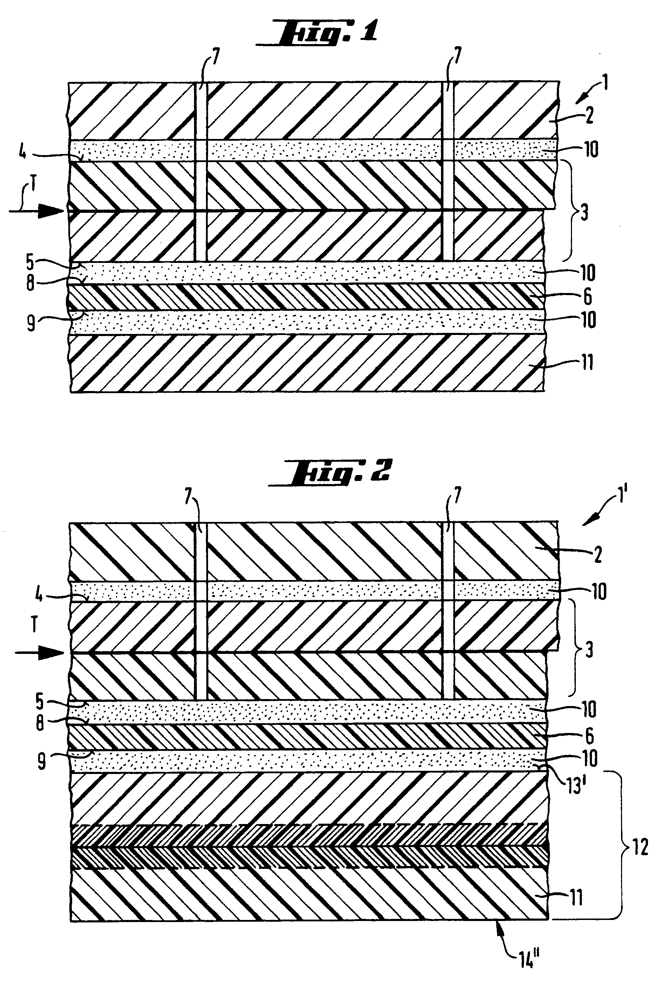

Die in Figur 1 gezeigte mehrlagige Folie (1) besteht aus der Trägerfolie (2), die mittels Kaschierkleber (10) mit der einen Außenseite (4) der aus einem einschichtigen zusammengelegten Blasschlauch gebildeten Verbundfolie (3) verbunden ist. Auf der anderen Außenseite (5) der Verbundfolie (3) ist ein weiterer Kaschierkleber (10) aufgetragen, der die eine Seite (8) einer Barrierefolie (6) mit der Verbundfolie (3) verbindet. Die andere Seite (9) der Barrierefolie (6) steht über einen weiteren Kaschierkleber (10) mit der aus einer einlagigen Folie gebildeten verschweißbaren Folienschicht (11) in Verbindung. Die Trägerfolie (2) und die mit ihr durch eine Kaschierschicht (10) verbundene Verbundfolie (3) sind mit Löchern (7) perforiert. Nach der Evakuierung ermöglicht die durch die Löcher (7) eintretende Luft die Trennung der Verbundfolie an der mit Pfeil T bezeichneten Stelle, an der die Verbundfolie (3) verblockt ist.

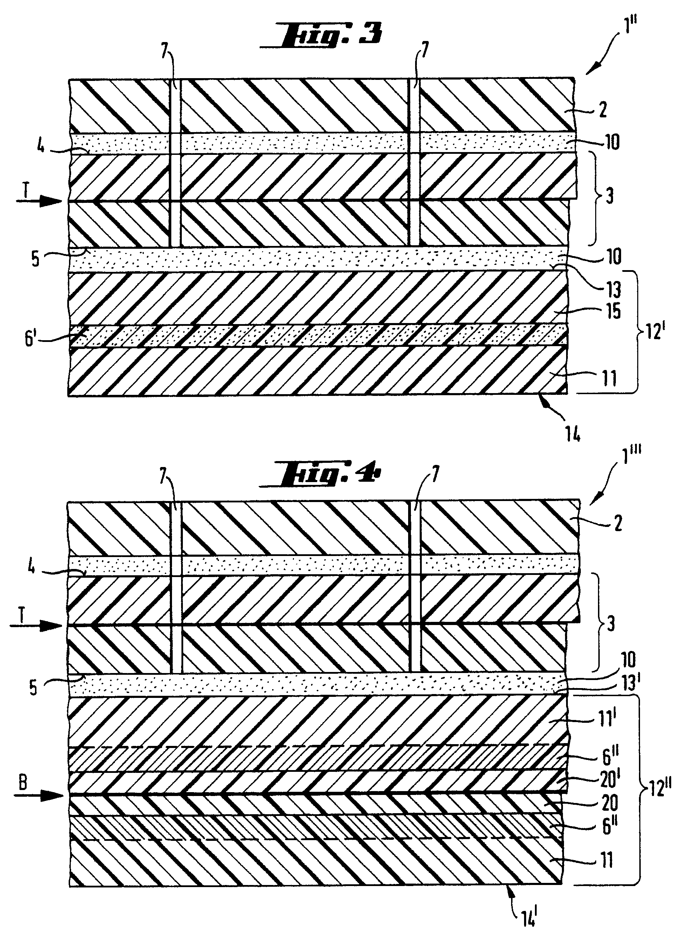

Die in Figur 2 gezeigte weitere Ausführungsform einer mehrlagigen Folie (1') entspricht der in Figur 1 gezeigten mehrlagigen Folie, weist aber statt der die verschweißbare Folienschicht bildenden einlagigen Folie eine weitere Verbundfolie (12) auf, die aus einem zweischichtigen, coextrudierten, zusammengelegten Blasschlauch gebildet ist. Die Verbundfolie (12) ist auf ihrer einen Seite (13') über Kaschierung (10) mit der Barrierefolie (6) verbunden, während ihre andere Seite (14") von der verschweißbaren Folienschicht (11) gebildet wird.

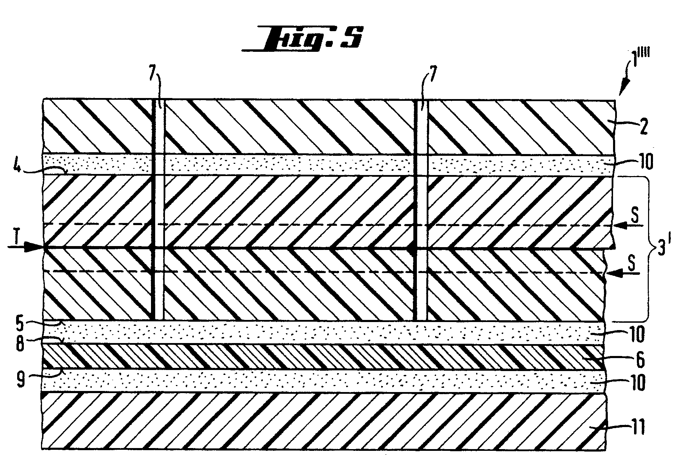

Bei der in Figur 3 gezeigten mehrlagigen Folie (1") entsprechen Trägerfolie (2) und Verbundfolie (3) den zu Figuren 1 und 2 beschriebenen Ausführungsformen. Die Barrierefolie (6') ist dagegen Bestandteil einer weiteren, dreilagigen Verbundfolie (12'), bei der die eine Seite (13), gebildet von Schicht (15), mit der Verbundfolie (3) verbunden ist, während die andere Seite (14) der Verbundfolie (12') durch die verschweißbare Folienschicht (11) gebildet wird. Die Barrierefolie (6') ist mittels nicht gezeigter Haftvermittler mit der Schicht (15) bzw. mit der verschweißbaren Folienschicht (11) durch Coextrusion verbunden.

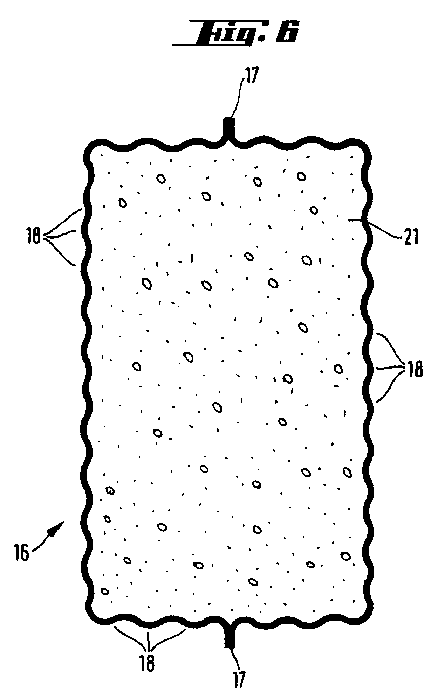

Die in Figur 4 gezeigte mehrlagige Folie (1"'), bei der wiederum Trägerfolie und Verbundfolie (3) den vorher besprochenen Ausführungsformen entsprechen, weist eine weitere Verbundfolie (12") auf, gebildet aus einem dreischichtigen, coextrudierten und zusammengelegten Blasschlauch, der an der mit Pfeil B gekennzeichneten Stelle verblockt ist. Zwischenschichten des Blasschlauches bilden Barrierefolien (6"). Die eine Seite (13') der weiteren Verbundfolie (12") ist mittels Kaschierung (10) wiederum mit der ersten Verbundfolie (3) verbunden, die andere Seite (14') der Verbundfolie (12") wird durch die verschweißbare Folienschicht (11) gebildet. Da die Verbundfolie (12") aus einem zusammengelegten Blasschlauch gebildet ist, entspricht die verschweißbare Folienschicht (11) in Bezug auf die Dicke und stoffliche Zusammensetzung der Schicht (11'), die mittels Kaschierung (10) mit der Verbundfolie (3) verbunden ist. In gleicher Weise stimmen auch die Barrierefolien (6") überein und auch die miteinander verblockten Innenschichten (20;20') sind in Bezug auf Dicke und Rohstoffzusammensetzung identisch. Die Schichten (11;11') sind mit den Barrierefolien (6;6') und diese mit den Innenschichten (20;20') durch nicht gezeigte, coextrudierte Haftvermittlerschichten mittels Schmelzbindung verbunden.

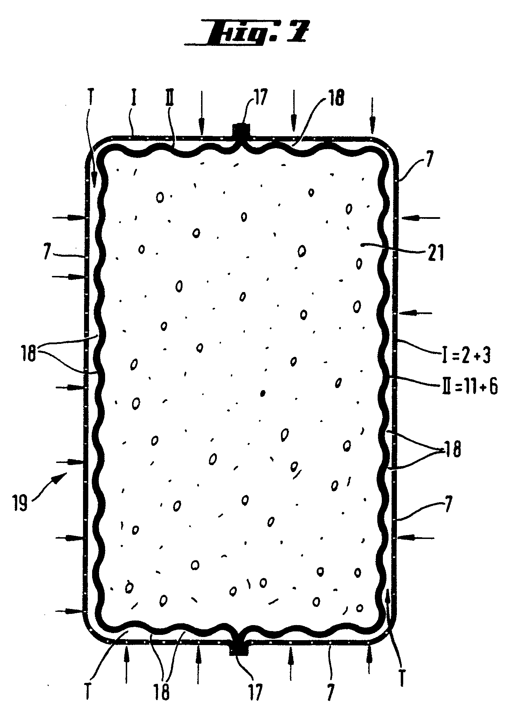

In Figur 5 wird eine mehrlagige Folie (1"") gezeigt, die sich von der in Figur 1 gezeigten Ausführungsform durch eine andersartige Konstruktion der mit der Trägerfolie (2) bzw. mit der Barrierefolie (6) in Verbindung stehenden Verbundfolie (3') auszeichnet. Pfeil T bezeichnet wiederum die Trennstelle, an der die aus einem zweischichtigen Blasschlauch gebildete Verbundfolie (3') verblockt ist und an welcher nach Abschluß der Evakuierung infolge der durch die Löcher (7) eintretenden Luft eine Trennung erfolgt. An den mit S bezeichneten Stellen sind die Schichten der durch Coextrusion hergestellten Verbundfolie (3') mittels Schmelzverbund verbunden. Die Verbundfolie (3') ist mit ihrer Außenseite (5) über Kaschierung (10) mit der einen Seite (8) der Barrierefolie (6), die auf ihrer anderen Seite (9) mit der verschweißbaren Folienschicht (11), gebildet aus einer einlagigen Folie, über den weiteren Kaschierkleber (10) verbunden ist.

Figur 6 zeigt einen Verpackungsbeutel (16), hergestellt aus einem bekannten Einfachwickler, unmittelbar nach Abschluß der Evakuierung. Schweißnähte (17) verschließen beidseitig den Verpackungsbeutel (16). Deutlich ist zu erkennen, wie durch Stauchfalten (18) wellige Konturen gebildet werden und dadurch der gesamte Verpackungsbeutel ein unattraktives Aussehen erhält.

Der in Figur 7 gezeigte Verpackungsbeutel besteht aus der erfindungsgemäßen mehrlagigen Folie, die hier in vereinfachter Form dargestellt ist. Mit dem Pfeil T ist die Trennzone bezeichnet, an der die mehrlagige Folie sich nach Abschluß der Evakuierung mittels der durch die Löcher (7) eingeströmten Luft in den nicht mehr durch den äußeren Luftdruck gegenüber dem Vakuum zusammengedrückten, aus Trägerfolie (2) und der einen Hälfte der Verbundfolie (3) bestehenden Bereich I und den aus Barrierefolie (6) und verschweißbare Schicht (11) aufweisenden Bereich II gesplittet hat. Deutlich ist erkennbar, daß der Bereich II durch das erzeugte Vakuum eng am Verpackungsgut (21) anliegt, die gebildeten Stauchfalten (18) sich aber nicht auf den Bereich I durchdrücken und dieser Bereich daher wie ein Außenwickler wirkend über ein attraktives Aussehen verfügt.

In den Figuren beschriebene Folien:

Trägerfolie (2):
Polyester biaxial gereckt 12 $\mu$m

Verbundfolie (3):
hergestellt aus einwandigem Polyäthylenblasschlauch,
Wanddicke: 15 $\mu$m
Gesamtdicke: 30 $\mu$m

Verbundfolie (3'):
hergestellt aus zweischichtigem Blasschlauch
Innenschicht: Äthylen/Vinylacetat-Copolymeres 5 $\mu$m
Außenschicht: Polyäthylen 10 $\mu$m
Gesamtdicke 30 $\mu$m

Barrierefolie (6):
Aluminium 7 $\mu$m

Barrierefolie (6';6"):
Äthylen/Vinylalkoholcopolymeres (EVOH), 5 $\mu$m

Kaschierung (10):
1,8 g/m² lösungsmittelhaltig

verschweißbare Folienschicht (11) (einlagige Folie):
Polyäthylen 70 $\mu$m

verschweißbare Folienschicht (11) (als Teil der weiteren Verbundfolie (12')): Polyäthylen 30 $\mu$m

verschweißbare Folienschicht (11) (als Teil der weiteren Verbundfolie (12)): Polyäthylen 25 $\mu$m

(als Teil der weiteren Verbundfolie (12")): Polyäthylen 15 $\mu$m

Innenschichten (20;20') der weiteren Verbundfolie

(12"): Polyäthylen 5 $\mu$m

## Patentansprüche

1. Mehrlagige Folie (1;1';1";1'''';1'''') mit
    a) einer die Oberseite bildenden ein- oder mehrlagigen Trägerfolie (2), die durch eine Klebeschicht (10) verbunden ist, mit
    b) einer Außenseite einer aus Polyäthylen oder Polyäthylencopolymeren bestehenden ersten Verbundfolie (3;3'), gebildet aus einem zusammengelegten und innenseitig durch Verblocken verbundenen Blasschlauch,
    c) einer auf der Unterseite der mehrlagigen Folie (1;1';1";1''';1'''') angeordneten verschweißbaren Folienschicht (11),
    d) einer Gassperrschicht,
    dadurch gekennzeichnet, daß
    e) die Trägerfolie (2) und die erste Verbundfolie (3;3') mit nadelstichgroßen Löchern (7) perforiert sind,
    f) die andere Außenseite (5) der ersten Verbundfolie (3;3') durch eine weitere Klebeschicht (10) verbunden ist mit
        1. der einen Seite (8) einer die Gassperrschicht bildenden gas- und aromadichten, lichtundurchlässigen Barrierefolie (6), die auf ihrer anderen Seite (9) mit: einer die verschweißbare Folienschicht (11) bildenden einlagigen Folie kaschiert ist oder die mit einer weiteren Verbundfolie (12) kaschiert ist, die auf ihrer der Kaschierseite gegenüberliegenden Seite die verschweißbare Folienschicht (11) aufweist, oder
        2. einer Seite (13;13') einer weiteren Verbundfolie (12';12"), die als Gassperre eine oder mehrere gas- und aromadichte Barrierefolien (6';6") als Zwischenschicht aufweist und deren andere Seite (14;14') die verschweißbare Folienschicht (11) bildet.

2. Mehrlagige Folie nach Anspruch 1, dadurch gekennzeichnet, daß die Barrierefolie (6) aus: Aluminium, gerecktem oder ungerecktem Polyamid oder Polyester, metallisierten oder mit PVDC-Lack beschichtetem Polyamid oder Polyester oder aus einem Äthylen/Vinylalkohol/Copolymeren (EVOH) besteht.

3. Mehrlagige Folie nach Anspruch 1, dadurch gekennzeichnet, daß die Barrierefolie (6';6") aus Polyvinylidenchlorid (PVDC), einem Äthylen/Vinylalkoholcopolymeren (EVOH) oder einem ungereckten, aromatischen Polyamid

**4.** Mehrlagige Folie nach einem der Ansprüche 1 bis 3, dadurch gekennzeichnet, daß die Verbundfolie (3) aus einem einschichtigen Blasschlauch gebildet ist.

**5.** Mehrlagige Folie nach einem der Ansprüche 1 bis 3, dadurch gekennzeichnet, daß die Verbundfolie (3') aus einem coextrudierten zwei- bis fünfschichtigen, zusammengelegten Blasschlauch gebildet ist, dessen Außenlagen mit den verblockten Innenlagen durch Schmelzverbindung verbunden sind.

**6.** Mehrlagige Folie nach einem der Ansprüche 1 bis 5, dadurch gekennzeichnet, daß die Trägerfolie (2) aus biaxial gerecktem Polyester (P), Polyamid (OPA) oder Polypropylen (OPP) besteht.

**7.** Mehrlagige Folie nach einem der Ansprüche 1 bis 6, dadurch gekennzeichnet, daß die weitere Verbundfolie (12) aus einem coextrudierten zwei- bis fünfschichtigen, zusammengelegten Blasschlauch gebildet ist, dessen Außenlagen mit den Innenlagen durch Schmelzverbindung und dessen Innenlagen miteinander durch Blockbindung verbunden sind.

**8.** Mehrlagige Folie nach einem der Ansprüche 1 bis 6, dadurch gekennzeichnet, daß die weitere Verbundfolie (12') dreilagig ausgebildet ist, wobei die Zwischenschicht die Barrierefolie (6') bildet.

**9.** Mehrlagige Folie nach einem der Ansprüche 1 bis 6, dadurch gekennzeichnet, daß die weitere Verbundfolie (12'') aus einem coextrudierten drei- bis fünfschichtigen, zusammengelegten Blasschlauch gebildet ist und zwei Zwischenschichten der weiteren Verbundfolie (12'') als Barrierefolien (6'') ausgebildet sind.

**10.** Mehrlagige Folie nach einem der Ansprüche 1 bis 9, dadurch gekennzeichnet, daß die Löcher (7) einen Durchmesser von 0,2 bis 1,0 mm aufweisen.

**11.** Verfahren zur Herstellung einer mehrlagigen Folie (1;1';1'''') nach einem der Ansprüche 1 bis 10, dadurch gekennzeichnet, daß
a) die Trägerfolie (2) bedruckt und auf eine der beiden Außenseiten der ersten Verbundfolie (3;3') kaschiert wird,
b) der entstandene Folienverbund zur Erzeugung der nadelstichgroßen Löcher (7) durch eine Nadelwalze geführt wird,

c) eine Seite einer Barrierefolie (6) mit der anderen Seite der Verbundfolie (3) durch Kaschieren verbunden wird,
d) auf die andere Seite der Barrierefolie (6) eine die verschweißbare Folienschicht (11) bildende einlagige Folie oder eine die Folienschicht (11) aufweisende weitere Verbundfolie (12) aufkaschiert wird.

**12.** Verfahren zur Herstellung einer mehrlagigen Folie (1'';1''') nach einem der Ansprüche 1 bis 10, dadurch gekennzeichnet, daß
a) die Trägerfolie (2) bedruckt und auf eine der beiden Außenseiten der ersten Verbundfolie (3) kaschiert wird,
b) der entstandene Folienverbund zur Erzeugung der nadelstichgroßen Löcher (7) durch eine Nadelwalze geführt wird,
c) eine weitere Verbundfolie (12'), enthaltend eine Barriereschicht (6'), oder eine weitere Verbundfolie (12''), enthaltend Barrierefolien (6''), auf die andere der beiden Außenseiten der ersten Verbundfolie (3) aufkaschiert wird.

**13.** Verwendung der mehrlagigen Folie nach einem der Ansprüche 1 bis 10 für die Vakuumverpackung von rieselfähigem, körnigem Verpackungsgut.

**14.** Verwendung gemäß Anspruch 13 zur Vakuumverpackung von gemahlenem Kaffee.

**Claims**

**1.** Multi-layer film (1;1';1'';1''';1'''') having
a) a single-layer or multi-layer support film (2) forming the upper side and bonded by means of an adhesive layer (10) to
b) an outer side of a first composite film (3;3') which comprises polyethylene or polyethylene copolymers and is formed from a collapsed blown tube bonded on the inside by blocking,
c) a weldable film layer (11) arranged on the underside of the multi-layer film (1;1';1''; 1''';1''''),
d) a gas barrier layer,

characterised in that

e) the support film (2) and the first composite film (3;3') are perforated by pinhole-sized holes (7),
f) the other outer side (5) of the first composite film (3;3') is bonded by means of a further adhesive layer (10) to
1) one side (8) of a barrier film (6) which forms the gas barrier layer, is gas-tight, aroma-proof and impermeable to light, and which is laminated on the other side (9) to:

a single-layer film forming the weldable film layer (11), or which is laminated to a further composite film (12) having the weldable film layer (11) on the opposite side to the laminated side, or

2) one side (13;13') of a further composite film (12';12") which has as gas barrier one or more gas-tight and aroma-proof barrier films (6';6") as intermediate layer and the other side (14;14') of which forms the weldable film layer (11).

2. Multi-layer film according to Claim 1, characterised in that the barrier film (6) comprises: aluninium, stretched or unstretched polyamide or polyester, metallised or PVDC-lacquered polyamide or polyester, or an ethylene/vinyl alcohol copolymer (EVOH).

3. Multi-layer film according to Claim 1, characterised in that the barrier film (6';6") comprises polyvinylidene chloride (PVDC), an ethylene/vinyl alcohol copolymer (EVOH) or an unstretched aromatic polyamide.

4. Multi-layer film according to one of Claims 1 to 3, characterised in that the composite film (3) is formed from a single-layer blown tube.

5. Multi-layer film according to one of Claims 1 to 3, characterised in that the composite film (3') is formed from a co-extruded two- to five-layer collapsed blown tube, the outer layers of which are bonded to the blocked inner layers by fusion.

6. Multi-layer film according to one of Claims 1 to 5, characterised in that the support film (2) comprises biaxially stretched polyester (P), polyamide (OPA) or polypropylene (OPP).

7. Multi-layer film according to one of Claims 1 to 6, characterised in that the further composite film (12) is formed from a co-extruded two- to five-layer collapsed blown tube, the outer layers of which are bonded to the inner layers by fusion and the inner layers of which are bonded to one another by block bonding.

8. Multi-layer film according to one of Claims 1 to 6, characterised in that the further composite film (12') consists of three layers, the intermediate layer forming the barrier film (6').

9. Multi-layer film according to one of Claims 1 to 6, characterised in that the further composite film (12") is formed from a co-extruded three- to five-layer collapsed blown tube, and two intermediate layers of the further composite film (12") are in the form of barrier films (6").

10. Multi-layer film according to one of Claims 1 to 9, characterised in that the holes (7) have a diameter of from 0.2 to 1.0 mm.

11. Method for the production of a multi-layer film (1;1';1"") according to one of Claims 1 to 10, characterised in that

a) the support film (2) is printed and laminated onto one of the two outer sides of the first composite film (3;3')

b) the resulting film composite is led through a needle roller to produce the pinhole-sized holes (7),

c) one side of a barrier film (6) is bonded to the other side of the composite film (3) by laminating

d) onto the other side of the barrier film (6) there is laminated a single-layer film forming the weldable film layer (11) or a further composite film (12) including the film layer (11).

12. Method for the production of a multi-layer film (1";1"') according to one of Claims 1 to 10, characterised in that

a) the support film (2) is printed and laminated onto one of the two outer sides of the first composite film (3),

b) the resulting film composite is led through a needle roller to produce the pinhole-sized holes (7),

c) a further composite film (12'), containing a barrier layer (6'), or a further composite film (12"), containing barrier films (6"), is laminated onto the other of the two outer sides of the first composite film (3).

13. Use of the multi-layer film according to one of Claims 1 to 10 for the vacuum packing of pourable, granular goods being packaged.

14. Use according to Claim 13 for the vacuum packing of ground coffee.

## Revendications

1. Film multicouche (1 ; 1' ; 1" ; 1"' ; 1"") comprenant

a) un film support (2) à une ou plusieurs couches formant la face supérieure, qui est lié par une couche d'adhésif (10) à

b) une face extérieure d'un premier film composite (3 ; 3') en polyéthylène ou en copolymères de polyéthylène formé à partir d'une gaine soufflée pliée et liée par adhérence entre feuilles côté intérieur,

c) un film soudable (11) appliqué sur la face inférieure du film multicouche (1 ; 1' ; 1" ; 1''' ; 1''''),

d) une couche formant barrière aux gaz, **caractérisé** en ce que

e) le film support (2) et le premier film composite (3 ; 3") sont percés de trous (7) de la taille de trous d'aiguille,

f) l'autre face extérieure (5) du premier film composite (3 ; 3') est liée au moyen d'une couche d'adhésif (10) supplémentaire à

1. l'une des faces (8) d'un film barrière (6) opaque, étanche aux gaz et aux aromes formant la barrière aux gaz, qui est lié par couchage sur son autre face (9) à un film monocouche formant le film soudable (11) ou qui est lié par couchage à un autre film composite (12), qui comporte le film soudable (11) sur sa face opposée à la face de couchage ou

2. Une face (13 ; 13') d'un film composite (12' ; 12") supplémentaire, qui comporte comme couche intermédiaire un ou plusieurs films barrières (6' ; 6") étanches aux gaz et aux aromes formant la barrière aux gaz et dont l'autre face (14 ; 14') constitue le film soudable (11).

2. Film multicouche selon la revendication 1, **caractérisé** en ce que le film barrière (6) est constitué : d'aluminium, de polyamide ou de polyester étiré ou non étiré, de polyamide ou de polyester métallisé ou revêtu de vernis PVDC ou de copolymère d'éthylène-alcool de vinyle (EVOH).

3. Film multicouche selon la revendication 1, **caractérisé** en ce que le film barrière (6' ; 6") est constitué de poly(chlorure de vinylidène) (PVDC), d'un copolymère d'éthylène-alcool de vinyle (EVOH) ou d'un polyamide aromatique non étiré.

4. Film multicouche selon l'une des revendications 1 à 3, **caractérisé** en ce que le film composite (3) est formé à partir d'une gaine soufflée à une seule couche.

5. Film multicouche selon l'une des revendications 1 à 3, **caractérisé** en ce que le film composite (3') est formé d'une gaine soufflée pliée comportant 2 à 5 couches, coextrudée, dont les couches extérieures sont liées par fusion aux couches intérieures liées entre elles par adhérence entre feuilles.

6. Film multicouche selon l'une des revendications 1 à 5, **caractérisé** en ce que le film support (2) est constitué de polyester (P) étiré bi-orienté, de polyamide (OPA) ou de polypropylène (OPP).

7. Film multicouche selon l'une des revendications 1 à 6, **caractérisé** en ce que le film composite (12) supplémentaire est formé par une gaine soufflée pliée, comprenant 2 à 5 couches, coextrudée, dont les couches extérieures sont liées par fusion aux couches intérieures et dont les couches intérieures sont liées entre elles par adhérence entre feuilles.

8. Film multicouche selon l'une des revendications 1 à 6, **caractérisé** en ce que le film composite (12') supplémentaire comporte trois couches, la couche intermédiaire formant le film barrière (6').

9. Film multicouche selon l'une des revendications 1 à 6, **caractérisé** en ce que le film composite (12") supplémentaire est formé par une gaine soufflée pliée comportant 3 à 5 couches, coextrudée, et en ce que deux couches intermédiaires du film composite (12") supplémentaire sont réalisées sous forme de films barrières (6").

10. Film multicouche selon l'une des revendications 1 à 9, **caractérisé** en ce que les trous (7) ont un diamètre compris entre 0,2 et 1,0 mm.

11. Procédé de fabrication d'un film multicouche (1 ; 1' ; 1'''') selon l'une des revendications 1 à 10, **caractérisé** en ce que :

a) on imprime le film support (2) et on le couche sur l'une des deux faces extérieures du premier film composite (3 ; 3'),

b) on fait passer l'assemblage de films obtenu sur un tambour muni d'aiguilles pour réaliser les trous (7) de la taille de trous d'aiguille,

c) on lie par couchage une face d'un film barrière (6) à l'autre face du film composite (3),

d) on lie par couchage l'autre face du film barrière (6) avec un film monocouche formant le film soudable (11) ou avec un film composite (12) supplémentaire comportant le film soudable (11).

12. Procédé de fabrication d'un film multicouche (1" ; 1"') selon l'une des revendications 1 à 10, **caractérisé** en ce que :

a) on imprime le film support (2) et on le couche sur l'une des faces extérieures du premier film composite (3),

b) on fait passer l'assemblage de films obtenu sur un tambour muni d'aiguille pour réaliser les trous (7) de la taille de trous d'aiguille,

c) on lie par couchage un film composite (12') supplémentaire comportant une couche barrière (6') ou un film composite (12") supplémentaire comportant des films barrières (6"), avec l'autre des deux faces extérieures du premier film composite (3).

13. Utilisation du film multicouche selon l'une des revendications 1 à 10 pour l'emballage sous vide de produits en grains en vrac.

14. Utilisation selon la revendication 1 pour l'emballage sous vide de café moulu.

# Fig. 1

# Fig. 2

10

## Fig. 3

## Fig. 4

Fig. 5

Fig. 6

EP 0 282 875 B1

# Fig. 7

I = 2 + 3
II = 11 + 6

14